# DEMANDE DE BREVET EUROPEEN

(11) **EP 1 643 689 A1**
(43) Date de publication de la demande: **05.04.2006**
(21) Numéro de dépôt: 05292022.0
(22) Date de dépôt: 28.09.2005
(51) Int. Cl.: H04L 12/28

(54) **Procede de selection automatique d'une configuration de securite pour les terminaux d'utilisateur nomades**

(30) Priorité: 01.10.2004 FR 0410400
(71) Demandeur: FRANCE TELECOM, 75015 Paris (FR)
(72) Inventeur: Rabot, Wilfrid, 14440 Cresserons (FR); Lovric, Ivan, 34400 Lunel (FR); Cazenave, Plerre, 14930 Eterville (FR)
(74) Mandataire: Bentz, Jean-Paul

(57) **Abrégé**

Procédé de sélection d'une configuration de sécurité d'un terminal (10) d'utilisateur susceptible d'être connecté à au moins un réseau (1, 2) par plusieurs interfaces réseau, comprenant des étapes au cours desquelles le terminal (10) : détecte tout changement de connexion physique du terminal à un réseau ; vérifie que le terminal est connecté à un réseau par une liaison physique unique ; déconnecte toutes les liaisons physiques avec un réseau pour ne conserver qu'une liaison physique ; détermine les caractéristiques de la liaison physique conservée ; et configure le terminal en fonction des caractéristiques de la liaison physique conservée.

## Description

La présente invention concerne la protection des terminaux lorsqu'ils sont connectés à un réseau informatique privé ou public, tel que le réseau Internet,

Elle s'applique notamment, mais non exclusivement aux terminaux d'utilisateurs nomades, quel que soit le réseau auquel ils sont connectés, le mode de connexion et le type de terminal. Ainsi le réseau peut être de type Ethernet, WiFi, GPRS (General Packet Radio Service), ADSL (Asymmetric Digital Subscriber Line), RTC (Réseau Téléphonique Commuté), ..., le mode de connexion peut être de type filaire, ou sans fil (par exemple Bluetooth), avec ou sans proxy intermédiaire, et le terminal peut être de type PC, PDA, ...

A l'heure actuelle, les utilisateurs nomades disposent de plus en plus de moyens de connexion à un réseau. Avec le développement des réseaux sans fil tels que WiFi et Bluetooth, les terminaux des utilisateurs nomades disposent généralement de plusieurs interfaces réseau qui peuvent être activées simultanément. En outre, certaines de ces interfaces réseau peuvent se connecter automatiquement, par exemple au démarrage du terminal, sans action particulière de l'utilisateur. Il en résulte que la sécurité de tels terminaux se trouve affectée.

Pour pallier cet inconvénient, l'utilisateur doit en permanence vérifier manuellement l'unicité de sa connexion réseau.

En général, la sécurité d'un terminal est assurée par ce que l'on appelle un pare-feu qui dans certaines situations, notamment de nomadisme, doit être configuré manuellement par l'utilisateur, et activé ou désactivé selon que le terminal est connecté ou non à un environnement sécurisé.

Le cas le plus fréquent se produit avec les utilisateurs disposant d'un ordinateur portable qu'ils peuvent utiliser sur leur lieu de travail habituel ou en dehors. A cet effet, l'ordinateur dispose d'une interface réseau Ethernet (filaire) ou d'une interface WiFi qui leur permet de se connecter à un réseau local, le réseau local étant lui-même connecté à un réseau public IP tel que le réseau Internet par l'intermédiaire d'un proxy et d'un pare-feu. Lorsque l'utilisateur se trouve en situation de nomade (dehors de son lieu de travail habituel), il peut se connecter au réseau Internet, par l'intermédiaire de l'interface WiFi et d'un pare-feu logiciel installé dans l'ordinateur.

Actuellement, à chaque fois qu'il quitte son bureau et accède au réseau Internet en situation de nomade ou retourne à son bureau, l'utilisateur doit manuellement configurer ses cartes d'interface réseau, son pare-feu et les paramètres proxy de son navigateur. Il en résulte des risques d'erreur importants pouvant avoir de graves conséquences si les fonctions de sécurité ne sont pas activées correctement ou si le terminal est connecté au réseau Internet simultanément par l'intermédiaire d'un réseau local sécurisé et d'une interface WiFi. Des erreurs de configuration peuvent également empêcher le terminal de se connecter au réseau local ou Internet, ou d'être mis à jour à distance (mises à jour de logiciels et anti-virus) lorsqu'il est connecté à un réseau local sécurisé. De telles erreurs de configuration peuvent également entraîner des dysfonctionnements du logiciel de navigation (mauvaise configuration des paramètres proxy) rendant impossibles les connexions au réseau Internet, avec pour conséquences une perte de temps et des appels inutiles au service de soutien informatique.

La situation se complique davantage si le terminal de l'utilisateur dispose de plus de deux interfaces réseau, chaque interface étant alors associée à un environnement réseau respectif et une configuration de sécurité constituée d'un ensemble de valeurs de paramètres de configuration, notamment d'un pare-feu.

La présente invention a pour but de supprimer ces inconvénients et notamment de sécuriser la connexion au réseau du terminal.

A cet effet, l'invention propose un procédé comprenant des étapes au cours desquelles le terminal :
- vérifie si le terminal est connecté à un réseau par une liaison physique unique,
- si l'unicité de la connexion n'a pas été vérifiée, déconnecte toutes les liaisons physiques avec un réseau pour ne conserver qu'une liaison physique,
- détermine les caractéristiques de la liaison physique conservée, et
- configure le terminal en fonction des caractéristiques de la liaison physique conservée.

Avantageusement, un ordre de priorité est attribué à chacune des liaisons physiques possibles du terminal avec un réseau, la liaison physique conservée étant la plus prioritaire.

Selon un mode de réalisation préféré de l'invention, si une liaison physique avec un réseau ne peut pas être déconnectée, le terminal émet un message d'alerte à l'utilisateur et configure le terminal en tenant compte des liaisons physiques actives.

Selon un mode de réalisation préféré de l'invention, la détermination des caractéristiques d'une liaison physique avec un réseau comprend une étape d'identification d'un réseau local éventuel auquel l'interface réseau active est connectée, en effectuant une tentative de connexion à un serveur sécurisé connu du terminal et censé être visible uniquement du réseau local.

Selon un mode de réalisation préféré de l'invention, la configuration du terminal consiste à sélectionner un ensemble de valeurs de paramètres, correspondant à la liaison réseau conservée.

Selon un mode de réalisation préféré de l'invention, l'étape consistant à vérifier si le terminal est connecté au réseau par une liaison unique est précédée d'une étape de détection d'un changement de connexion physique du terminal à un réseau.

Selon une variante, l'étape de détection est déclenchée périodiquement.

Selon une autre variante, l'étape de détection est déclenchée par la réception d'un évènement système.

L'invention concerne également un programme de configuration automatique de la sécurité d'un terminal susceptible d'être connecté à au moins un réseau par plusieurs interfaces réseau, ce programme comprenant des instructions de code de programme pour l'exécution du procédé défini ci-avant, lorsque le programme est exécuté sur un terminal.

L'invention concerne également un terminal contenant un tel programme.

L'invention concerne en outre un terminal d'utilisateur nomade comprenant au moins deux interfaces réseau pour se connecter à au moins un réseau, un pare-feu et un logiciel de navigation. Selon l'invention, ce terminal comprend des moyens de traitement programmés pour :
- vérifier si le terminal est connecté à un réseau par une liaison physique unique,
- si l'unicité de la connexion n'est pas vérifiée, déconnecter toutes les liaisons physiques avec un réseau pour ne conserver qu'une liaison physique,
- déterminer les caractéristiques de la liaison physique conservée, et
- configurer le terminal en fonction des caractéristiques de la liaison physique conservée.

Avantageusement, les moyens de traitement sont programmés pour attribuer un ordre de priorité à chacune des liaisons réseau possibles du terminal, la liaison réseau conservée étant la plus prioritaire.

Selon un mode de réalisation préféré de l'invention, les moyens de traitement sont programmés pour émettre un message d'alerte de l'utilisateur si une liaison physique ne peut pas être déconnectée, et pour configurer le terminal en tenant compte de plusieurs liaisons physiques actives.

Selon un mode de réalisation préféré de l'invention, les moyens de traitement sont programmés pour identifier un réseau local éventuel auquel l'interface réseau active est connectée, en effectuant une tentative de connexion à un serveur sécurisé connu du terminal et censé être visible uniquement du réseau local.

Un mode de réalisation préféré de l'invention sera décrit ci-après, à titre d'exemple non limitatif, avec référence aux dessins annexés dans lesquels :
La figure 1 représente schématiquement un terminal nomade ;
La figure 2 représente schématiquement l'environnement du terminal montré sur la figure 1, connecté à un réseau public ;
La figure 3 représente schématiquement l'environnement du terminal montré sur la figure 1 lorsqu'il est connecté au même réseau public par l'intermédiaire d'un réseau local privé ;
La figure 4 illustre sous la forme d'un organigramme différentes étapes du procédé selon l'invention ;
La figure 5 montre plus en détail sous la forme d'un organigramme, l'une des étapes du procédé illustré sur la figure 4.

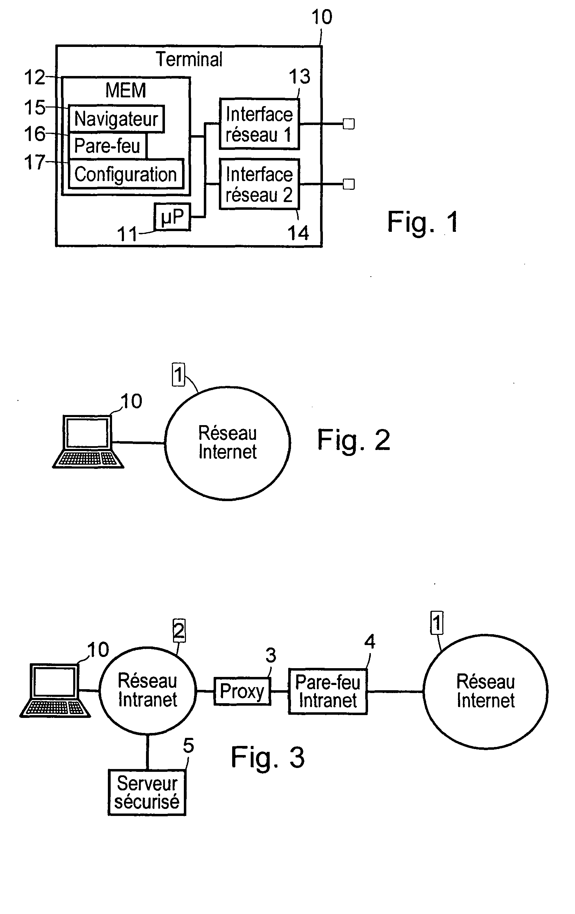

La figure 1 représente un terminal 10 par exemple de type ordinateur personnel portable ou assistant électronique personnel (PDA), comprenant plusieurs interfaces réseau 13, 14 pour se connecter de différentes manières à un réseau tel que le réseau Internet, un processeur 11 et des mémoires 12 de données et de programmes mémorisant un logiciel de navigation Internet 15 et un pare-feu 16 pour être protégé contre des tentatives d'intrusion provenant du réseau.

Les interfaces réseau 13, 14 peuvent être de type carte réseau Ethernet, modem (ADSL, RTC, GPRS), interface WiFi, Interface Bluetooth, etc. Ces interfaces peuvent en outre être de même type. Ainsi, le terminal peut comprendre par exemple deux interfaces WiFi et un modem RTC.

Cette configuration permet au terminal 10 d'être par exemple connecté directement à réseau public 1 tel que le réseau Internet, comme illustré sur la figure 2, ou par l'intermédiaire d'un réseau local 2, comme illustré sur la figure 3. Une telle connexion peut être soit physique en faisant intervenir une interface physique, soit virtuelle pour obtenir un service avancé (réseau privé virtuel, ...) sur une ou plusieurs connexions physiques.

Sur la figure 3, le terminal 10 est connecté à un réseau local privé 2 tel qu'un réseau local d'entreprise ou Intranet, ce réseau étant lui-même connecté au réseau public 1 par l'intermédiaire d'un proxy 3 et d'un pare-feu 4. La connexion entre le terminal et le réseau local est effectuée classiquement par l'intermédiaire d'une interface Ethernet.

Le passage entre les configurations illustrées par les figures 2 et 3 exige une configuration des interfaces réseau 13, 14 installées dans le terminal, du pare-feu 16 et des paramètres proxy du logiciel de navigation 15.

A cet effet, le terminal 10 est équipé selon l'invention d'un dispositif 17 de configuration automatique, avantageusement réalisé sous la forme d'un programme conçu pour vérifier en permanence que le terminal est connecté à un réseau 1, 2 par une unique liaison physique, pour déterminer le type de réseau auquel le terminal est ainsi connecté, et pour sélectionner une configuration de sécurité en fonction du réseau et du type de liaison avec ce réseau.

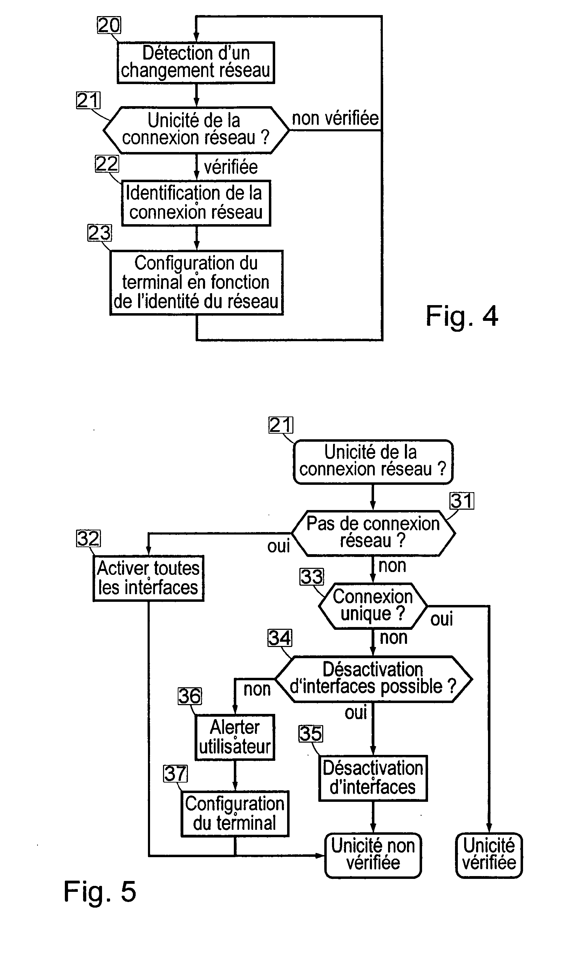

Comme illustré sur la figure 4, le dispositif de configuration 17 est conçu pour détecter un changement de connexion physique avec un réseau, et à chaque détection d'un tel changement, pour exécuter une procédure 20 comprenant l'exécution d'une procédure 21 de vérification que le terminal 10 est connecté à un réseau 1 par une seule liaison physique. Si l'unicité de la connexion réseau n'est pas vérifiée, le dispositif exécute à nouveau la procédure 20. Dans le cas contraire, le dispositif identifie la connexion physique à l'étape suivante 22, puis configure à l'étape 23 suivante le terminal en fonction du type de connexion physique identifié à l'étape précédente.

La détection d'un changement de connexion physique avec un réseau consiste à déterminer les changements d'état connecté/déconnecté des interfaces réseau du terminal 10. Cette détection peut être réalisée par la vérification de l'état connecté/déconnecté des interfaces réseau, qui peut être déclenchée soit périodiquement, soit par la réception d'un événement système (tel qu'un changement d'adresse IP).

La vérification de l'unicité de la connexion physique du terminal avec un réseau consiste à vérifier qu'une seule connexion physique est active sur le terminal à un moment donné. Cette vérification consiste à appliquer les règles suivantes :
- si aucune connexion physique n'est active, toutes les interfaces réseau sont activées,
- lorsque deux interfaces réseau sont détectées connectées simultanément, le dispositif tente de désactiver les interfaces réseau définies comme moins prioritaires.

Un exemple de procédure 21 de vérification de l'unicité de la connexion physique est illustré sur la figure 5. Sur cette figure, la procédure teste dans une première étape 31 si une interface réseau du terminal est active. Si aucune interface réseau n'est active, toutes les interfaces réseau sont activées à l'étape 32 et la procédure 21 se termine en retournant que l'unicité de la connexion réseau n'est pas vérifiée. Si à l'étape 31 au moins une interface réseau est active, la procédure teste à l'étape 33 si plusieurs interfaces réseau sont actives. Si une seule interface réseau est active, la procédure 21 se termine en retournant que l'unicité de la connexion physique avec un réseau est vérifiée. Dans le cas contraire, la procédure 21 tente à l'étape 34 de désactiver les interfaces réseau les moins prioritaires pour ne garder que la plus prioritaire.

L'ordre de priorité des connexions physiques peut être choisi de la manière suivante :
1. connexion via un modem (RTC, GPRS, ADSL),
2. connexion via une liaison filaire Ethernet,
3. connexion via une liaison WiFi,
4. connexion via une liaison Bluetooth.

Toutes ces connexions peuvent être désactivées à l'exception des connexions par l'intermédiaire d'un modem. Ainsi, si l'utilisateur établit plusieurs connexions avec des modems, la procédure avertit l'utilisateur (étape 36) qu'il dispose de plusieurs modems connectés simultanément, et configure le terminal pour assurer la plus grande sécurité (activation du pare-feu local 16), compte tenu de ces connexions (étape 37).

Dans les autres cas, seule la connexion physique la plus prioritaire est conservée (étape 35). En particulier, si le terminal 10 est connecté au réseau par l'intermédiaire de l'interface WiFi, une connexion physique par l'intermédiaire de la liaison filaire Ethernet provoque la désactivation de la liaison WiFi. Ensuite, la procédure 21 se termine en retournant que l'unicité de la connexion physique n'est pas vérifiée.

L'identification du réseau connecté à l'interface physique (étape 22) est effectuée d'une manière sécurisée à l'aide des paramètres d'authentification d'accès au réseau (802.1 x, ...), ou en effectuant une tentative de connexion à un serveur accessible uniquement dans le réseau local à l'aide d'un protocole sécurisé (SSL, HTTPS, ...).
Ainsi par exemple, comme représenté sur la figure 2, un serveur HTTPS 5 visible uniquement dans le réseau local 2 peut être utilisé pour identifier ce réseau : si l'adresse du serveur 5, connue du terminal donne effectivement accès à un serveur et que cet accès est sécurisé (authentification du serveur) alors le terminal se trouve bien connecté au réseau local 2.

La configuration du terminal 10 en fonction du réseau et/ou de l'interface réseau (étape 23) consiste à sélectionner une configuration de sécurité (activation/configuration d'un pare-feu, établissement d'une connexion de type réseau privé virtuel, ...), ainsi qu'à configurer d'autres applications non liées à la sécurité, mais dépendant du réseau local connecté, telles que le navigateur du terminal (paramètre proxy du navigateur). Le terminal mémorise ainsi une configuration (ensemble de valeurs de paramètres de sécurité et de configuration) pour chaque liaison possible du terminal avec le réseau public 1.

## Revendications

1. Procédé de sélection d'une configuration de sécurité d'un terminal (10) d'utilisateur susceptible d'être connecté à au moins un réseau (1, 2) par plusieurs interfaces réseau (13, 14),
**caractérisé en ce qu'**il comprend des étapes au cours desquelles le terminal (10) :
- vérifie (21) si le terminal est connecté à un réseau par une liaison physique unique,
- si l'unicité de la connexion n'a pas été vérifiée, déconnecte (35) toutes les liaisons physiques avec un réseau pour ne conserver qu'une liaison physique,
- détermine (22) les caractéristiques de la liaison physique conservée, et
- configure (23) le terminal en fonction des caractéristiques de la liaison physique conservée.

2. Procédé selon la revendication 1,
**caractérisé en ce qu'**un ordre de priorité est attribué à chacune des liaisons physiques possibles du terminal (10) avec un réseau, la liaison physique conservée étant la plus prioritaire.

3. Procédé selon la revendication 1 ou 2,
**caractérisé en ce que** si une liaison physique avec un réseau ne peut pas être déconnectée, le terminal (10) émet (36) un message d'alerte à l'utilisateur et configure (37) le terminal en tenant compte des liaisons physiques actives.

4. Procédé selon l'une des revendications 1 à 3,
**caractérisé en ce que** la détermination des caractéristiques d'une liaison physique avec un réseau comprend une étape d'identification d'un réseau local (2) éventuel auquel l'interface réseau active est connectée, en effectuant une tentative de connexion à un serveur sécurisé (5) connu du terminal (10) et censé être visible uniquement du réseau local.

5. Procédé selon l'une des revendications 1 à 4,
**caractérisé en ce que** la configuration du terminal (10) consiste à sélectionner un ensemble de valeurs de paramètres, correspondant à la liaison réseau conservée.

6. Procédé selon l'une des revendications 1 à 5, dans lequel l'étape consistant à vérifier si le terminal est connecté au réseau par une liaison unique est précédée d'une étape de détection d'un changement de connexion physique du terminal à un réseau.

7. Procédé selon la revendication 6, dans lequel l'étape de détection est déclenchée périodiquement.

8. Procédé selon l'une des revendications 1 à 5, dans lequel l'étape de détection est déclenchée par la réception d'un évènement système.

9. Programme de configuration automatique de la sécurité d'un terminal susceptible d'être connecté à au moins un réseau (1, 2) par plusieurs interfaces réseau (13, 14),
**caractérisé en ce qu'**il comprend des instructions de code de programme pour l'exécution du procédé selon l'une des revendications 1 à 8, lorsque le programme est exécuté sur un terminal.

10. Terminal comprenant le programme selon la revendication 9.

11. Terminal (10) d'utilisateur nomade comprenant au moins deux interfaces réseau (13, 14) pour se connecter à au moins un réseau (1,2), un pare-feu (16) et un logiciel de navigation (15),
**caractérisé en ce qu'**il comprend des moyens de traitement (11, 12) programmés pour :
- vérifier si le terminal est connecté à un réseau (1, 2) par une liaison physique unique,
- si l'unicité de la connexion n'est pas vérifiée, déconnecter toutes les liaisons physiques avec un réseau pour ne conserver qu'une liaison physique,
- déterminer les caractéristiques de la liaison physique conservée, et
- configurer le terminal en fonction des caractéristiques de la liaison physique conservée.

12. Terminal selon la revendication 11,
**caractérisé en ce que** les moyens de traitement (11, 12) sont programmés pour attribuer un ordre de priorité à chacune des liaisons réseau possibles du terminal (10), la liaison réseau conservée étant la plus prioritaire.
